# EUROPEAN PATENT APPLICATION

(11) **EP 4 624 674 A1**
(43) Date of publication of application: **01.10.2025**
(21) Application number: 24744522.4
(22) Date of filing: 06.01.2024
(51) Int. Cl.: E02F 3/39, E02F 3/47

(54) **DEEP FOUNDATION EXCAVATOR**

(30) Priority: 20.01.2023 JP 2023007275
(71) Applicant: Hitachi Construction Machinery Co., Ltd., Tokyo 110-0015 (JP)
(72) Inventor: INAMOTO, Akira, Tsuchiura-shi, Ibaraki 300-0013 (JP); SEKI, Seiji, Tsuchiura-shi, Ibaraki 300-0013 (JP); ETOU, Shinya, Tsuchiura-shi, Ibaraki 300-0013 (JP)
(74) Representative: Manitz Finsterwald Patent- und Rechtsanwaltspartnerschaft mbB
(86) International application number: PCT/JP2024/000090
(87) International publication number: WO 2024/154599

(57) **Abstract**

A base arm (11) is formed as a tubular body including a left side surface plate (11A) and a right side surface plate (11B) opposite with an interval in a direction perpendicular to a length direction, and a second lifting sheave shaft (24) and a second opening/closing sheave shaft (29) are disposed between an upper guide arm connecting pin (13B) and a lower guide arm connecting pin (14B) in the vertical direction of the base arm (11). The base arm (11) is provided with a reinforcing plate (12) extending in the length direction of the base arm (11), with the left side surface plate (11A) and the right side surface plate (11B) connected, and part of the reinforcing plate (12) is disposed between the upper guide arm connecting pin (13B) and the lower guide arm connecting pin (14B) in the vertical direction of the base arm (11).

## Description

### TECHNICAL FIELD

The present disclosure relates to a deep foundation excavator suitable for use in e.g., excavation work for a pit.

### BACKGROUND ART

Deep foundation excavators are known working machines suitable for use in e.g., excavation work for a pit. One typical working mechanism of a deep foundation excavator includes a boom mounted on a vehicle body, an arm rotatably mounted on a tip end of the boom, a clamshell bucket liftably provided on the arm, and a bucket lifting and opening/closing device controlling a lifting operation and an opening/closing operation of the clamshell bucket. The bucket lifting and opening/closing device is configured to include a movable sheave moveably in a length direction of the arm, a fixed sheave fixed to the arm, a lifting rope and an opening/closing rope looped around the movable sheave and the fixed sheave, a lifting cylinder raising and lowering the clamshell bucket, and an opening/closing cylinder opening and closing the clamshell bucket.

The lifting cylinder winds the lifting rope by changing an interval between the movable sheave and the fixed sheave to raise and lower the clamshell bucket. The opening/closing cylinder winds the opening/closing rope by changing an interval between the movable sheave and the fixed sheave to open and close the clamshell bucket. The deep foundation excavator lowers the clamshell bucket into the pit, with a tip end of the arm disposed over the pit, and then opens and closes the clamshell bucket to excavate earth and sand (Patent Document 1).

### PRIOR ART DOCUMENT

### PATENT DOCUMENT

Patent Document 1: Japanese Patent Laid-Open No. 2021-161716 A

### SUMMARY OF THE INVENTION

However, deep foundation excavators of conventional technologies include main components of a bucket lifting and opening/closing device disposed on a rear side of an arm in order to enhance the stability of winding a lifting rope and an opening/closing rope by changing an interval between a movable sheave and a fixed sheave. Thus, such deep foundation excavators of conventional technologies are prone to stress concentration on the rear side of the arm, that is, on a portion ranging from a mounting portion with a boom to a rear end of the arm. Consequently, the deep foundation excavators of conventional technologies unfortunately involve reduced strength of the arm and shortened service life at an early stage.

An object of the present invention is to provide a deep foundation excavator capable of enhancing the strength of a base arm.

A deep foundation excavator of the present invention includes a self-propelled vehicle body and a working mechanism provided on the vehicle body, characterized in that the working mechanism includes: a base arm rotatably provided on the vehicle body and linked to a clamshell bucket liftably disposed on one end side of the base arm in a length direction thereof; an upper guide arm and a lower guide arm connected to the other end side of the base arm via an upper guide arm connecting pin and a lower guide arm connecting pin, with a constant interval in the vertical direction and extending in the length direction of the base arm; a first lifting sheave and a first opening/closing sheave moveably provided along the upper guide arm and the lower guide arm; a lifting cylinder mounted on the base arm and moving the first lifting sheave and the first opening/closing sheave; a second lifting sheave and a second opening/closing sheave separated from the first lifting sheave and the first opening/closing sheave and each rotatably provided on the base arm around a sheave shaft; a lifting rope looped around the first lifting sheave and the second lifting sheave and raising and lowering the clamshell bucket; and an opening/closing rope looped around the first opening/closing sheave and the second opening/closing sheave and opening and closing the clamshell bucket, characterized in that the base arm is formed as a tubular body including a pair of side plates opposite with an interval in a direction perpendicular to the length direction, the sheave shaft of the second lifting sheave and the second opening/closing sheave is disposed between the upper guide arm connecting pin and the lower guide arm connecting pin in the vertical direction of the base arm, the base arm is provided with a reinforcing plate fixed to at least one of the pair of side plates and extending in the length direction of the base arm, and part of the reinforcing plate is disposed between the upper guide arm connecting pin and the lower guide arm connecting pin in the vertical direction of the base arm.

According to the present invention, deformation of a pair of side plates of a base arm by external forces, stress concentration and so on can be restricted to enhance the strength of the base arm by allowing a reinforcing plate to be fixed to at least one of the pair of side plates.

### BRIEF DESCRIPTION OF THE DRAWINGS

Fig. 1 is a left side view of a deep foundation excavator according to one embodiment of the present invention.

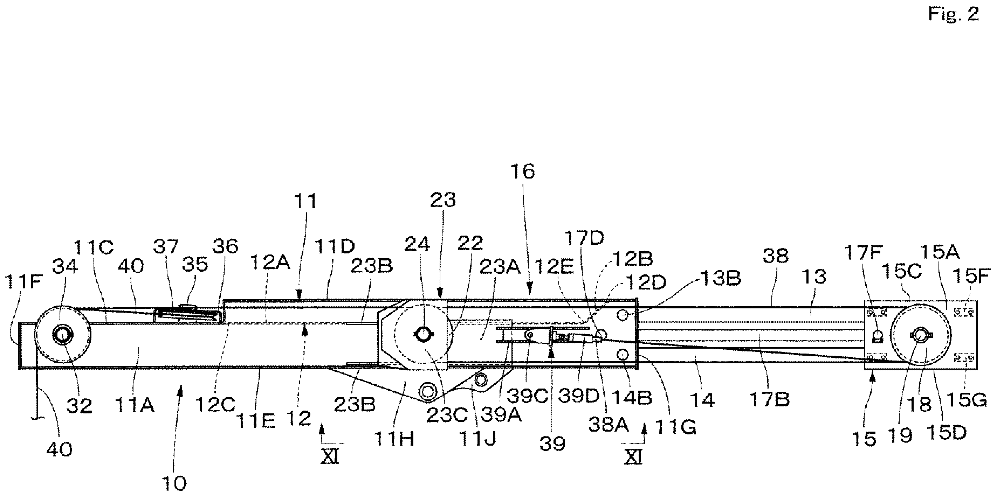

Fig. 2 is a left side view of an arm, a bucket lifting and opening/closing device and the like.
Fig. 3 is a plan view of the arm, the bucket lifting and opening/closing device and the like.
Fig. 4 is a right side view of the arm, the bucket lifting and opening/closing device and the like except a partial sectional view.
Fig. 5 is an exploded view of the arm.
Fig. 6 is a cross-sectional view of a cylinder retaining portion of a base arm taken from line VI-VI of Fig. 5.
Fig. 7 is an enlarged left side view of the base arm, a second lifting sheave and the like.
Fig. 8 is a cross-sectional view of the base arm, the second lifting sheave, and the like taken from line VIII-VIII of Fig. 7.
Fig. 9 is an enlarged right side view of the base arm, a second opening/closing sheave, an opening/closing cylinder and the like.
Fig. 10 is an enlarged plan view of the base arm, the opening/closing cylinder, a lifting rope mounting bracket, an opening/closing rope mounting bracket and the like.
Fig. 11 is a bottom view of the base arm, a boom mounting bracket, the second lifting sheave, the second opening/closing sheave and the like with, any rope omitted, taken from line XI-XI of Fig. 2.
Fig. 12 is a left side view of a base arm according to a modification.
Fig. 13 is a cross-sectional view of the base arm, a second lifting sheave and the like taken from line XIII-XIII of Fig. 12.

### MODE FOR CARRYING OUT THE INVENTION

A deep foundation excavator according to one embodiment of the present invention will be described in detail with reference to the attached drawings. In this embodiment, the running direction of a deep foundation excavator is defined as front-and-rear direction, and the direction perpendicular to the running direction is defined as right-and-left direction.

A deep foundation excavator 1 is manufactured based upon a crawler-type hydraulic excavator, for example. The deep foundation excavator 1 is configured by a self-propelled crawler type lower traveling structure 2, an upper revolving structure 3 rotatably mounted on the lower traveling structure 2, and a later-described working mechanism 5 provided on the upper revolving structure 3. The lower traveling structure 2 and the upper revolving structure 3 constitute a vehicle body of the deep foundation excavator 1.

A cab 4 is provided on a left front side of the upper revolving structure 3. The cab 4 defines an operator's room, and an operator's seat 4A for an on-board operator is provided in the cab 4. An operating device (not shown) for performing a traveling operation of the lower traveling structure 2 and a revolving operation of the upper revolving structure 3 and operating the working mechanism 5 is provided on the periphery of the operator's seat 4A.

The working mechanism 5 is configured to include a boom 6 rotatably mounted on the upper revolving structure 3 in the vertical direction, a later-described arm 10, a clamshell bucket 9, and a bucket lifting and opening/closing device 16. A boom cylinder 7 is provided between the upper revolving structure 3 and the boom 6, and the boom 6 rotates with respect to the upper revolving structure 3, depending on expanding/contracting operations of the boom cylinder 7. An arm cylinder 8 is provided between the boom 6 and an arm 10, and the arm 10 rotates with respect to the boom 6 and the upper revolving structure 3, depending on expanding/contracting operations of the arm cylinder 8.

The clamshell bucket 9 is disposed on a front end side of a later-described base arm 11 (one end in a length direction) and liftably suspended using a later-described lifting rope 38. The clamshell bucket 9 has a bucket support portion 9A, a pair of buckets 9B, a connecting bracket 9C, and a pair of opening/closing arms 9D. The pair of buckets 9B are openably provided on a lower side of the bucket support portion 9A. The pair of buckets 9B are rotatably connected to the connecting bracket 9C. The pair of opening/closing arms 9D connect the bucket support portion 9A and the pair of buckets 9B, respectively. A plurality of upper sheaves 9E is provided at the bucket support portion 9A, and a plurality of lower sheaves 9F opposite the upper sheaves 9E in the vertical direction is provided on the connecting bracket 9C.

The other end 38B of a lifting rope 38 is mounted at the bucket support portion 9A of the clamshell bucket 9. A later-described opening/closing rope 40 is alternately looped around the upper sheaves 9E and the lower sheaves 9F of the clamshell bucket 9, and the other end 40B of an opening/closing rope 40 is mounted at the bucket support portion 9A of the clamshell bucket 9.

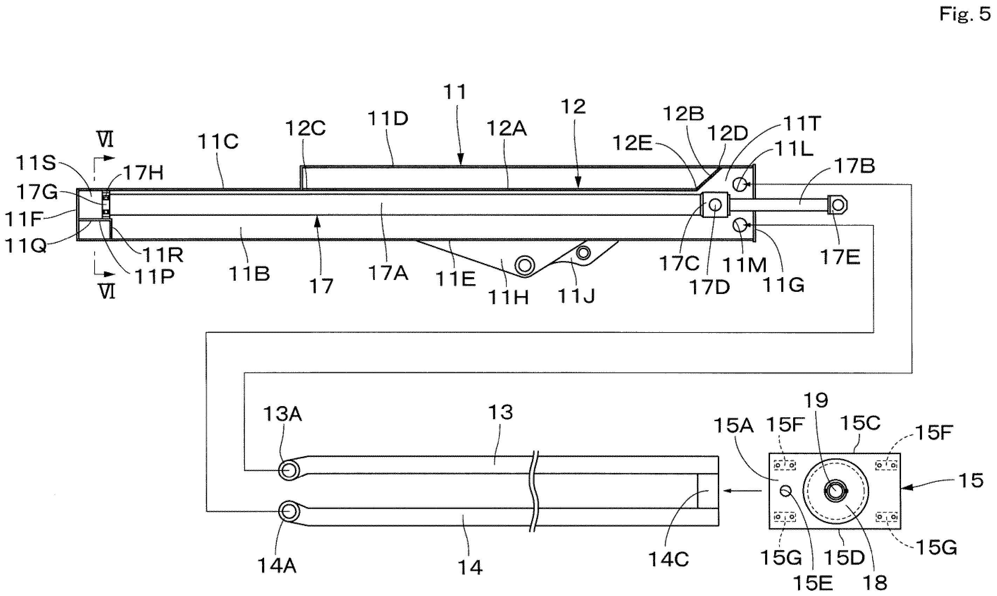

The arm 10 is rotatably mounted on a tip end of the boom 6. As shown in Fig. 5, the arm 10 is separably configured by a base arm 11 formed of a hollow tubular body and extending in the front-rear direction, an upper guide arm 13 and a lower guide arm 14 detachably provided on a rear side of the base arm 11, and a sheave mounting member 15 moveably mounted on the upper guide arm 13 and the lower guide arm 14.

The base arm 11 constitutes a base of the arm 10 and is formed as an angular tubular body extending in the vertical direction and having a rectangular-shaped cross section. The base arm 11 is surrounded by a left side surface plate 11A and a right side surface plate 11B, a front side upper surface plate 11C, a rear side upper surface plate 11D, and a lower surface plate 11E. The left side surface plate 11A and the right side surface plate 11B are a pair of side plates that are opposite in a direction (the right-and-left direction) perpendicular to a length direction of the arm 10 (the front-rear direction) . The front side upper surface plate 11C connects upper ends of a front side of the left side surface plate 11A and the right side surface plate 11B. The rear side upper surface plate 11D connects upper ends of a rear side of the left side surface plate 11A and the right side surface plate 11B. The lower surface plate 11E connects lower ends of the left side surface plate 11A and the right side surface plate 11B. The height dimension in the vertical direction of the left side surface plate 11A and the right side surface plate 11B is set to be smaller on the front side than on the rear side. Therefore, a stepped portion in the vertical direction is formed at a boundary portion of the front side upper surface plate 11C and the rear side upper surface plate 11D.

A front end of the base arm 11 (one end in a length direction) is closed by a front surface plate 11F, and a rear end 11G of the base arm 11 (the other end in the length direction) is an open end. A boom mounting bracket 11H and a cylinder mounting bracket 11J are provided on the lower surface plate 11E of the base arm 11.

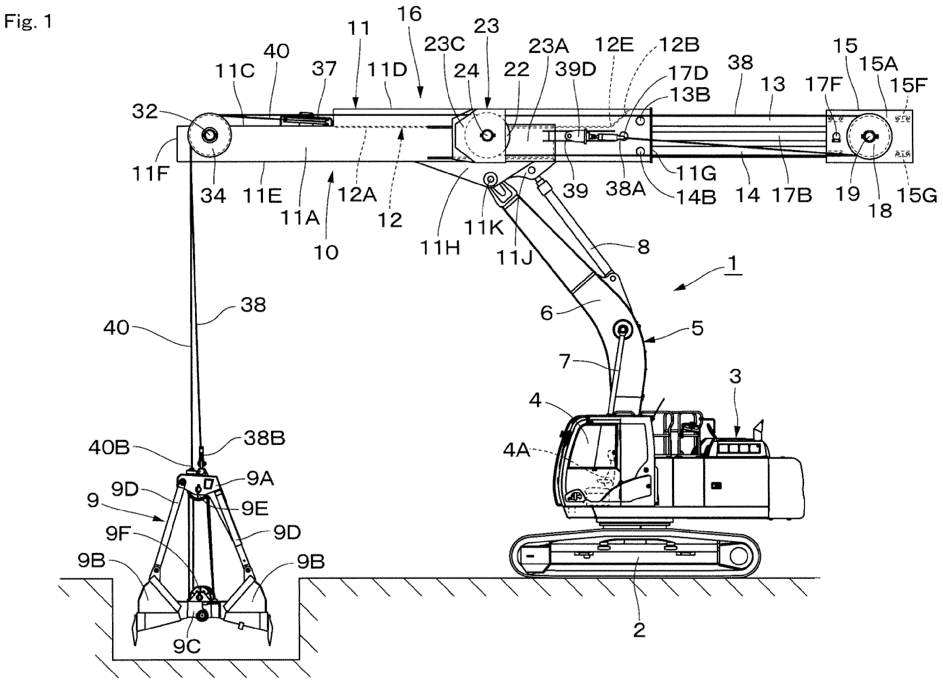

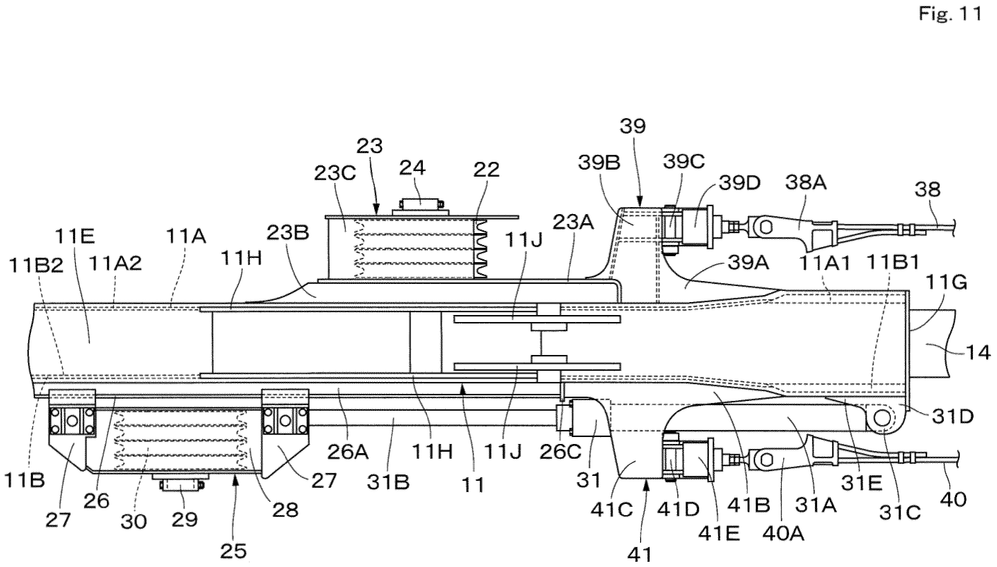

As shown in Fig. 11, the boom mounting bracket 11H is configured by two plates opposite with a constant interval in the right-and-left direction. A left boom mounting bracket 11H is located so as to overlap the left side surface plate 11A of the base arm 11 in the vertical direction, and a right boom mounting bracket 11H is located so as to overlap the right side surface plate 11B of the base arm 11 in the vertical direction. The boom mounting bracket 11H is rotatably connected to the tip end of the boom 6 via a boom connecting pin 11K (see Fig. 1). The cylinder mounting bracket 11J is pin-coupled to a tip end of the arm cylinder 8 whose base end is mounted on the boom 6. Therefore, the base arm 11 rotates around the boom connecting pin 11K in the front-rear direction or the vertical direction, depending on expanding/contracting operations of the arm cylinder 8.

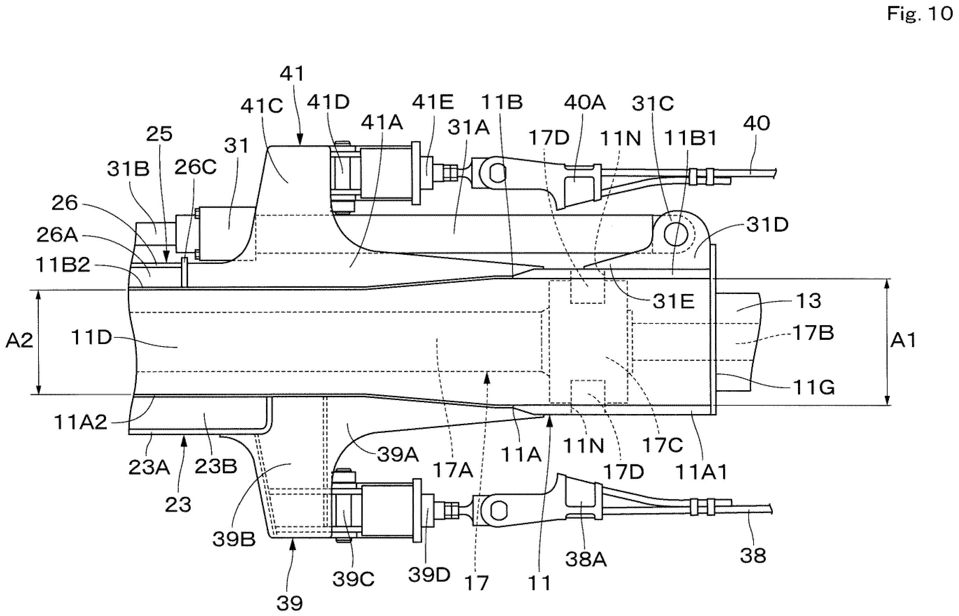

Two pin through holes 11L, 11M are formed on a rear end side of the left side surface plate 11A and the right side surface plate 11B, respectively, so as to be separated vertically and penetrated in the right-and-left direction (see Fig. 5). A later-described upper guide arm connecting pin 13B is inserted into the upper pin through hole 11L, and a later-described lower guide arm connecting pin 14B is inserted into the lower pin through hole 11M. Also, trunnion pin through holes 11N penetrating in the right-and-left direction are formed on a front side from the pin through holes 11L, 11M of the left side surface plate 11A and the right side surface plate 11B (see Fig. 10). Later-described cylinder support pins 17D are inserted into the two trunnion pin through holes 11N.

Herein, the interval between the left side surface plate 11A and the right side surface plate 11B of the base arm 11 is set to be smaller on a front end side of the base arm 11 (one end side of the base arm in a length direction thereof) than on the rear end 11G side of the base arm 11 (the other end side of the base arm in the length direction) where the lifting cylinder 17 is mounted via the cylinder support pin 17D. Specifically, as shown in Fig. 10, the left side surface plate 11A has a left rear side surface plate 11A1 disposed on the rear end 11G side of the base arm 11 and a left front side surface plate 11A2 disposed frontward of the left rear side surface plate 11A1. The right side surface plate 11B has a right rear side surface plate 11B1 disposed on the rear end 11G side of the base arm 11 and a right front side surface plate 11B2 disposed frontward of the right rear side surface plate 11B1. An interval A2 between the left front side surface plate 11A2 and the right front side surface plate 11B2 is set to be smaller than an interval A1 between the left rear side surface plate 11A1 and the right rear side surface plate 11B1 (A2 < A1).

A bending plate 11P is fixed to an internal corner portion intersected by the lower surface plate 11E and the front surface plate 11F of the base arm 11 (see Fig. 5). The bending plate 11P has a horizontal plate 11Q opposite with a constant interval with the lower surface plate 11E and a vertical plate 11R bending at a right angle from the horizontal plate 11Q toward the lower surface plate 11E. As a result, a cylinder retaining portion 11S surrounded by the left side surface plate 11A, the right side surface plate 11B, the front side upper surface plate 11C, the front surface plate 11F, and the horizontal plate 11Q of the bending plate 11P is formed at the internal corner portion intersected by the front side upper surface plate 11C and the front surface plate 11F of the base arm 11. The cylinder retaining portion 11S retains an end portion on a bottom side of the lifting cylinder 17 mounted within the base arm 11.

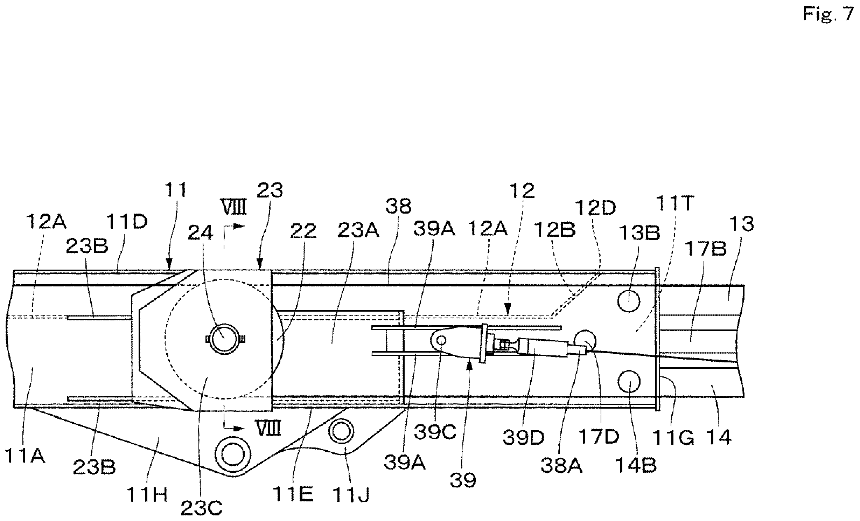

A reinforcing plate 12 extends in a length direction of the base arm 11 such that it is provided within the base arm 11 and connects the left side surface plate 11A and the right side surface plate 11B. As shown in Figs. 5 and 7, the reinforcing plate 12 is composed of a member different from the front side upper surface plate 11C and the rear side upper surface plate 11D of the base arm 11 and formed of one plate having a flat plate portion 12A and an inclined plate portion 12B. The flat plate portion 12A is disposed between the upper guide arm connecting pin 13B and the lower guide arm connecting pin 14B to extend in the length direction of the base arm 11, with a constant interval between the rear side upper surface plate 11D and the lower surface plate 11E. The inclined plate portion 12B bends rearward and upward from the flat plate portion 12A to extend upward of the upper guide arm connecting pin 13B.

A front end 12C of the reinforcing plate 12 (the flat plate portion 12A) is joined to a rear end of the front side upper surface plate 11C, and a rear end 12D of the reinforcing plate 12 (the inclined plate portion 12B) is joined to a rear end side of the rear side upper surface plate 11D. A bending portion 12E as a boundary portion between the flat plate portion 12A and the inclined plate portion 12B is disposed between a mounting portion with the boom 6 (the boom connecting pin 11K), and the upper guide arm connecting pin 13B and the lower guide arm connecting pin 14B in the length direction of the base arm 11. Specifically, the bending portion 12E is located to be adjacent forward of a later-described cylinder support pin 17D.

Thus, the reinforcing plate 12 connects the left side surface plate 11A and the right side surface plate 11B of the base arm 11. This configuration can restrict deformation of the left side surface plate 11A where a later-described second lifting sheave 22 and the like are mounted and the right side surface plate 11B where a later-described second opening/closing sheave 30 and the like are mounted by external forces. Also, the bending portion 12E of the reinforcing plate 12 is located to be adjacent forward of the cylinder support pin 17D, the inclined plate portion 12B of the reinforcing plate 12 extends from the flat plate portion 12A upward of the upper guide arm connecting pin 13B, and the rear end 12D of the reinforcing plate 12 is joined to the rear end side of the rear side upper surface plate 11D. As a result, a box structural portion 11T defined by the left side surface plate 11A, the right side surface plate 11B, the rear side upper surface plate 11D, the lower surface plate 11E, and the inclined plate portion 12B of the reinforcing plate 12 is formed on the rear end 11G side of the base arm 11 provided with the upper guide arm connecting pin 13B, the lower guide arm connecting pin 14B, and the cylinder support pin 17D (see Fig. 7).

The upper guide arm 13 and the lower guide arm 14 are detachably mounted on the rear side of the base arm 11 as a pair in the vertical direction. The upper guide arm 13 and the lower guide arm 14 are each formed as an angular tubular body having a rectangular-shaped cross section, and extend in the length direction of the base arm 11 (the front-rear direction) . As shown in Fig. 5, a cylinder portion 13A extending in the right-and-left direction is fixed to a front end of the upper guide arm 13, and a cylinder portion 14A extending in the right-and-left direction is fixed to a front end of the lower guide arm 14. The upper guide arm connecting pin 13B is inserted on an inner peripheral side of the cylinder portion 13A of the upper guide arm 13, and both ends of the upper guide arm connecting pin 13B are inserted into the pin through holes 11L of the base arm 11. The lower guide arm connecting pin 14B is inserted on an inner peripheral side of the cylinder portion 14A of the lower guide arm 14, and both ends of the lower guide arm connecting pin 14B are inserted into the pin through holes 11M of the base arm 11. Meanwhile, rear ends of the upper guide arm 13 and the lower guide arm 14 are connected via a connecting member 14C. As a result, the upper guide arm 13 and the lower guide arm 14 extend rearward from the rear end 11G of the base arm 11, with a constant interval in the vertical direction.

The sheave mounting member 15 is moveably mounted on the upper guide arm 13 and the lower guide arm 14. The sheave mounting member 15 moves in the front-rear direction along the upper guide arm 13 and the lower guide arm 14, with a later-described first lifting sheave 18 and a first opening/closing sheave 20 mounted on the sheave mounting member 15. The sheave mounting member 15 is formed as a tubular body having a rectangular-shaped cross section equivalent to the base arm 11 to surround the upper guide arm 13 and the lower guide arm 14 from outside. The sheave mounting member 15 is formed as a short tubular body (frame body) surrounded by a left side plate 15A, a right side plate 15B, an upper plate 15C and a lower plate 15D.

Pin through holes 15E penetrating in the right-and-left direction are formed at front side portions of the left side plate 15A and the right side plate 15B, respectively, constituting the sheave mounting member 15 (see Fig. 5). Later-described rod mounting pins 17F are inserted into the two pin through holes 15E. A later-described first lifting sheave shaft 19 is mounted at a central portion of the left side plate 15A constituting the sheave mounting member 15. A later-described first opening/closing sheave shaft 21 is mounted at a central portion of the right side plate 15B constituting the sheave mounting member 15.

Slide plates 15F are each provided between inner peripheral surfaces of the left side plate 15A, the right side plate 15B and the upper plate 15C of the sheave mounting member 15, and the upper guide arm 13, and each of the Slide plates 15F slidably abuts on the upper guide arm 13. Slide plates 15G are each provided between the inner peripheral surfaces of the left side plate 15A, the right side plate 15B, and the lower plate 15D of the sheave mounting member 15 and the lower guide arm 14, and each of the Slide plates 15G slidably abuts on the lower guide arm 14. The Slide plates 15F, 15G are fixed to the sheave mounting member 15, using bolts and the like to smoothly move (slide) the sheave mounting member 15 with respect to the upper guide arm 13 and the lower guide arm 14.

The bucket lifting and opening/closing device 16 is provided on the arm 10. The bucket lifting and opening/closing device 16 controls a number of operations including lifting operations and opening/closing operations of the clamshell bucket 9. The bucket lifting and opening/closing device 16 is configured to include a later-described lifting cylinder 17, a first lifting sheave 18, the first opening/closing sheave 20, a second lifting sheave 22, a second opening/closing sheave 30, an opening/closing cylinder 31, an intermediate guide sheave 37, the lifting rope 38, the opening/closing rope 40, a slack adjusting sheave 47, and a slack adjusting cylinder 48.

A lifting cylinder 17 is provided within the base arm 11, and extends in the length direction of the base arm 11 (in the front-and-rear direction). The lifting cylinder 17 raises and lowers the clamshell bucket 9 by expanding or contracting, depending on operations of the operating device provided in the cab 4. The lifting cylinder 17 has a tube 17A, a piston (not shown) inserted into the tube 17A, and a rod 17B whose base end is mounted on the piston and whose tip end projects from the tube 17A.

A mounting flange 17C is fixed to the tube 17A of the lifting cylinder 17, and two pin holes (not shown) are concentrically formed through the mounting flange 17C by interposing the tube 17A. Two cylinder support pins 17D inserted into the trunnion pin through holes 11N of the base arm 11 (the left side surface plate 11A and the right side surface plate 11B) are fitted to the two pin holes. As a result, the tube 17A of the lifting cylinder 17 is connected via the cylinder support pins 17D relative to the base arm 11.

Meanwhile, a mounting eye 17E is provided at a tip end of the rod 17B of the lifting cylinder 17. A rod mounting pin 17F is inserted into the mounting eye 17E and the pin through hole 15E of the sheave mounting member 15. As a result, the rod 17B of the lifting cylinder 17 is connected to the sheave mounting member 15 via the rod mounting pin 17F. Thus, the tube 17A of the lifting cylinder 17 is mounted on the base arm 11 via the cylinder support pins 17D, and the rod 17B is mounted on the sheave mounting member 15 via the rod mounting pin 17F. Therefore, the sheave mounting member 15 moves in the front-rear direction along the upper guide arm 13 and the lower guide arm 14 by expanding and contracting the lifting cylinder 17.

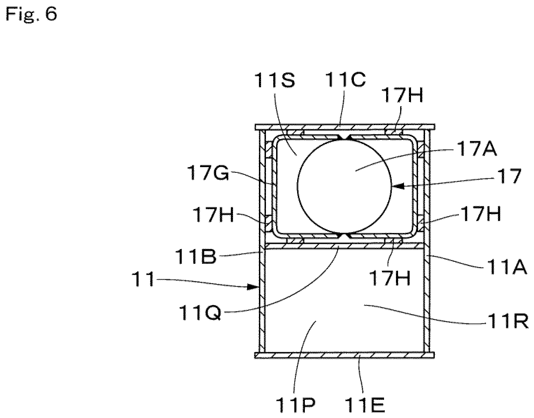

As shown in Figs. 5 and 6, a rectangular frame body 17G is fixed to an end portion on a bottom side of the lifting cylinder 17 (tube 17A), and the end portion on the bottom side of the tube 17A is disposed within the cylinder retaining portion 11S of the base arm 11 together with the frame body 17G. The frame body 17G is configured by two U-shaped frame members interposing the tube 17A radially, having a cross section that is slightly smaller than the cylinder retaining portion 11S of the base arm 11. A plurality of plate-shaped spacers 17H is mounted on an outer side surface of the frame body 17G. The plurality of spacers 17H is disposed between the left side surface plate 11A, the right side surface plate 11B, the front side upper surface plate 11C, the bending plate 11P (horizontal plate 11Q) constituting the cylinder retaining portion 11S of the base arm 11, and the frame body 17G. Thus, the end portion on the bottom side of the lifting cylinder 17 is accommodated within the cylinder retaining portion 11S of the base arm 11 via the frame body 17G and the spacers 17H. This configuration can restrain rocking of the lifting cylinder 17 around the cylinder support pin 17D to enhance the buckling strength of the lifting cylinder 17.

The first lifting sheave 18 is mounted on an outer side surface of the left side plate 15A constituting the sheave mounting member 15 via a first lifting sheave shaft 19. The first lifting sheave shaft 19 is fixed to the central portion of the left side plate 15A constituting the sheave mounting member 15. A plurality of (e.g., five) first lifting sheaves 18 is provided to be arranged in the axial direction of the first lifting sheave shaft 19, and is rotatably supported around the first lifting sheave shaft 19 relative to the sheave mounting member 15.

The first opening/closing sheave 20 is mounted on an outer side surface of the right side plate 15B constituting the sheave mounting member 15 via a first opening/closing sheave shaft 21. The first opening/closing sheave shaft 21 is fixed to the central portion of the right side plate 15B constituting the sheave mounting member 15. A plurality of (e.g., five) first opening/closing sheaves 20 is provided on the first opening/closing sheave shaft 21 to be arranged in the axial direction, and is rotatably supported around the first opening/closing sheave shaft 21 relative to the sheave mounting member 15.

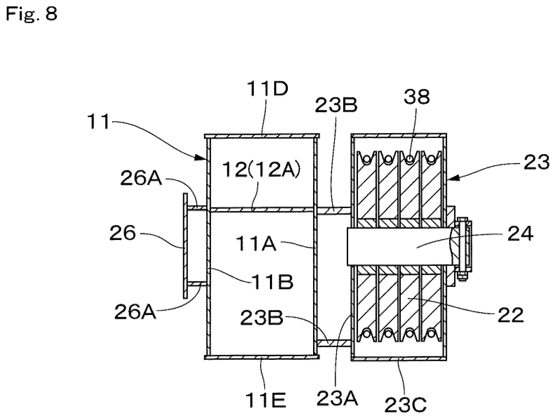

The second lifting sheave 22 is separated from the first lifting sheave 18 and provided on the base arm 11. The second lifting sheave 22 is mounted on an outer side surface of the left side surface plate 11A (the left front side surface plate 11A2) constituting the base arm 11 via a second lifting sheave bracket 23. As shown in Figs. 7 and 8, the second lifting sheave bracket 23 is configured to include a base plate 23A, a plurality of first rib plates 23B, and a sheave cover 23C. The base plate 23A extends in the front-rear direction, with a constant interval with the left side surface plates 11A of the base arm 11. The plurality of (e.g., two) first rib plates 23B is disposed in the vertical direction so as to cross over the second lifting sheave shaft 24 and keep a constant interval with each other to connect the left side surface plate 11A of the base arm 11 and the base plate 23A. The upper first rib plate 23B of the two first rib plates 23B is welded to the left side surface plate 11A in a direction perpendicular to the length direction of the base arm 11 (in the right-and-left direction) at a position so as to overlap the flat plate portion 12A of the reinforcing plate 12. The sheave cover 23C is formed as a frame covering a plurality of second lifting sheaves 22 from outside, and mounted on the base plate 23A.

The second lifting sheave shaft 24 is fixed to the base plate 23A of the second lifting sheave bracket 23, and disposed between the upper guide arm connecting pin 13B and the lower guide arm connecting pin 14B in the vertical direction of the base arm 11. The second lifting sheave shaft 24 supports the second lifting sheave 22 such that it is perpendicular to the length direction of the base arm 11 and projects away from the base arm 11 (leftward). The plurality of (e.g., four) second lifting sheaves 22 is provided to be arranged in the axial direction of the second lifting sheave shaft 24, and is rotatably supported around the second lifting sheave shaft 24 relative to the base arm 11. Therefore, the sheave mounting member 15 moves, depending on expanding/contracting operations of the lifting cylinder 17, to allow the first lifting sheave 18 mounted on the sheave mounting member 15 to approach or separate from the second lifting sheave 22. The lifting rope 38 is looped around the first lifting sheave 18 and the second lifting sheave 22.

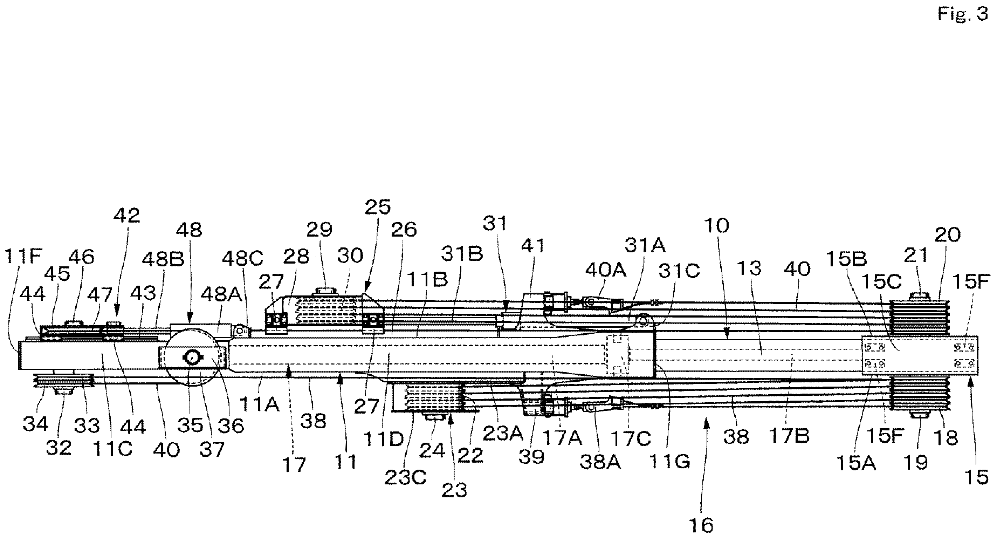

An opening/closing sheave moving mechanism 25 is located at an intermediate portion of the base arm 11 in the front-rear direction and provided on the right side surface plate 11B (the right front side surface plate 11B2). The opening/closing sheave moving mechanism 25 moveably supports the second opening/closing sheave 30 in the front-rear direction. As shown in Figs. 3, 4 and 11, the opening/closing sheave moving mechanism 25 is configured to include a guide rail 26, a slide member 27, a second opening/closing sheave bracket 28, and a second opening/closing sheave shaft 29.

The guide rail 26 is formed by a rectangular flat plate extending in the length direction of the base arm 11, and mounted on the right side surface plate 11B of the base arm 11 via a plurality of (e.g., two) second rib plates 26A. The second rib plates 26A are disposed in the vertical direction so as to cross over the second opening/closing sheave shaft 29 and keep a constant interval with each other to connect the right side surface plate 11B of the base arm 11 and the guide rail 26. As shown in Fig. 8, the upper second rib plate 26A of the two second rib plates 26A is welded to the right side surface plate 11B in a direction perpendicular to the length direction of the base arm 11 (in the right-and-left direction) at a position so as to overlap the flat plate portion 12A of the reinforcing plate 12. Also, a reinforcing front end plate 26B is welded between a front end of the guide rail 26 and the second rib plate 26A, and the right side surface plate 11B. A reinforcing rear end plate 26C is welded between a rear end of the guide rail 26 and the second rib plate 26A, and the right side surface plate 11B.

The front and rear slide members 27 are each slidably engaged with the guide rail 26 in the length direction. The second opening/closing sheave bracket 28 is mounted on the front and rear slide members 27 using bolts and the like, and movable in the length direction of the base arm 11 along the guide rail 26. A later-described rod 31B of the opening/closing cylinder 31 is mounted on the rear slide member 27. The second opening/closing sheave shaft 29 is fixed to the second opening/closing sheave bracket 28, and disposed between the upper guide arm connecting pin 13B and the lower guide arm connecting pin 14B in the vertical direction of the base arm 11. The second opening/closing sheave shaft 29 supports the second opening/closing sheave 30 such that it is perpendicular to the length direction of the base arm 11 and projects away from the base arm 11 (rightward).

The second opening/closing sheave 30 is rotatably mounted on the second opening/closing sheave shaft 29 of the opening/closing sheave moving mechanism 25. That is, the second opening/closing sheave 30 is moveably provided on an outer side surface of the right side surface plate 11B constituting the base arm 11 in the front-rear direction via the opening/closing sheave moving mechanism 25. A plurality of (e.g., four) second opening/closing sheaves 30 is provided to be arranged in the axial direction of the second opening/closing sheave shaft 29 provided on the opening/closing sheave moving mechanism 25, and rotatably supported around the second opening/closing sheave shaft 29 relative to the base arm 11.

The opening/closing cylinder 31 is provided between the base arm 11 and the second opening/closing sheave 30. The opening/closing cylinder 31 extends in the length direction of the base arm 11 to allow the second opening/closing sheave 30 to approach or separate from the first opening/closing sheave 20. The opening/closing cylinder 31 has a tube 31A, a piston (not shown) inserted into the tube 31A, and a rod 31B whose base end is mounted on the piston and whose tip end projects from the tube 31A. One end side (a bottom side) of the opening/closing cylinder 31 is mounted on a rear end side of the right side surface plate 11B constituting the base arm 11 via an opening/closing cylinder bracket 31C. A tip end of the rod 31B is connected to the slide member 27 of the opening/closing sheave moving mechanism 25, and mounted on the second opening/closing sheave 30 via the opening/closing sheave moving mechanism 25. The second opening/closing sheave 30 moves in the front-rear direction, depending on expanding/contracting operations of the opening/closing cylinder 31, to approach or separate from the first opening/closing sheave 20.

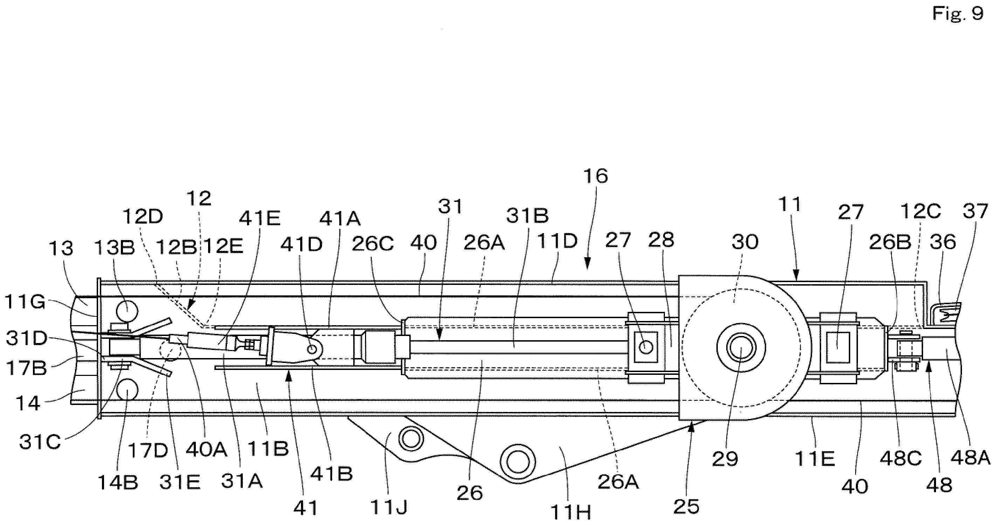

As shown in Fig. 9, the opening/closing cylinder bracket 31C is configured by two plates that are opposite in the vertical direction, and disposed between the upper guide arm connecting pin 13B and the lower guide arm connecting pin 14B, and the cylinder support pin 17D in the length direction of the base arm 11. Herein, one end 31D side (rear side) of the opening/closing cylinder bracket 31C in the length direction extends between the upper guide arm connecting pin 13B and the lower guide arm connecting pin 14B, with a constant interval in the vertical direction. Meanwhile, the other end 31E side (front side) of the opening/closing cylinder bracket 31C in the length direction is formed so as to gradually expand the interval in the vertical direction toward the cylinder support pin 17D. As a result, the other end 31E of the opening/closing cylinder bracket 31C is disposed to be adjacent to the cylinder support pin 17D vertically to reinforce the periphery of a mounting portion of the cylinder support pin 17D of the base arm 11 (trunnion pin through hole 11N).

A guide sheave support shaft 32 is provided on the front end side of the base arm 11. One end of the guide sheave support shaft 32 is fixed to a front end side of the left side surface plate 11A where the front surface plate 11F is fixed, and the other end of the guide sheave support shaft 32 projects leftward from the left side surface plate 11A. The guide sheave support shaft 32 rotatably supports a lifting guide sheave 33 and an opening/closing guide sheave 34.

The lifting guide sheave 33 and the opening/closing guide sheave 34 are provided on the left side surface plate 11A of the base arm 11 via the guide sheave support shaft 32. The lifting guide sheave 33 guides the lifting rope 38 looped around the first lifting sheave 18 and the second lifting sheave 22 to the clamshell bucket 9. The opening/closing guide sheave 34 guides the opening/closing rope 40 looped around the first opening/closing sheave 20, the second opening/closing sheave 30, and a later-described intermediate guide sheave 37 and the slack adjusting sheave 47 to the clamshell bucket 9. As a result, as shown in Fig. 1, for example, the clamshell bucket 9 can be raised and lowered in the vertical direction, using the lifting rope 38 looped around the lifting guide sheave 33 disposed on a front end of the arm 10, with the arm 10 held horizontal to the ground.

The lifting guide sheave 33 and the opening/closing guide sheave 34 are disposed on the front end side of the left side surface plate 11A of the base arm 11 for an on-board operator seated in the operator's seat 4A to be given good visibility. As a result, the operator can visually confirm the state of the lifting rope 38 and the opening/closing rope 40 mounted on the clamshell bucket 9, and operate the bucket lifting and opening/closing device 16.

An intermediate guide sheave support shaft 35 is provided on a rear side of the front side upper surface plate 11C constituting the base arm 11. A frame member 36 bent in a U-shaped cross section is fixed to the front side upper surface plate 11C of the base arm 11. The intermediate guide sheave shaft 35 has one end (lower end) mounted on the front side upper surface plate 11C and the other end (upper end) mounted on the frame member 36 to be slightly inclined rearward from the front side upper surface plate 11C and extend upward.

An intermediate guide sheave 37 is rotatably provided on the front side upper surface plate 11C of the base arm 11 via the intermediate guide sheave shaft 35. The intermediate guide sheave 37 is arranged between the opening/closing guide sheave 34 provided on the left side surface plate 11A of the base arm 11 and the slack adjusting sheave 47 provided on the right side surface plate 11B of the base arm 11. The intermediate guide sheave 37 guides the opening/closing rope 40 to the opening/closing guide sheave 34 by allowing the opening/closing rope 40 extending from the slack adjusting sheave 47 to be looped around.

The lifting rope 38 is provided between the arm 10 and the clamshell bucket 9 to liftably support the clamshell bucket 9. The lifting rope 38 is composed of a wire rope, and one end 38A of the lifting rope 38 is mounted on a lifting rope mounting bracket 39 provided on the left side surface plate 11A of the base arm 11. The other end 38B of the lifting rope 38 is mounted at the bucket support portion 9A of the clamshell bucket 9 to support the clamshell bucket 9 (see Fig. 1). An intermediate portion of the lifting rope 38 is alternately looped around a plurality of first lifting sheaves 18 and a plurality of second lifting sheaves 22.

As shown in Figs. 7 and 10, the lifting rope mounting bracket 39 is provided on the left side surface plate 11A of the base arm 11 so as to be adjacent to a rear side of the second lifting sheave bracket 23 to extend in the front-rear direction. The lifting rope mounting bracket 39 has two plates 39A that are opposite in the vertical direction with a constant interval, and an extension portion 39B extending leftward from the left side surface plate 11A is provided on a front side of the plate 39A. A joint 39D swingable around a pin 39C in the vertical direction is mounted on the extension portion 39B. The joint 39D constitutes part of the lifting rope mounting bracket 39, to which one end 38A of the lifting rope 38 is connected.

Herein, the lifting rope mounting bracket 39 is welded to the base plate 23A of the second lifting sheave bracket 23 at a front side portion thereof and to the left side surface plate 11A of the base arm 11 at a rear side portion thereof. Thus, the lifting rope mounting bracket 39 is integrally fixed to the second lifting sheave bracket 23. This configuration allows loads acting on the lifting rope 38 to be efficiently transmitted from the lifting rope mounting bracket 39, through the second lifting sheave bracket 23, and to the base arm 11.

The opening/closing rope 40 is provided between the arm 10 and the clamshell bucket 9 to open and close the pair of buckets 9B of the clamshell bucket 9. The opening/closing rope 40 is composed of a wire rope, and one end 40A of the opening/closing rope 40 is mounted on an opening/closing rope mounting bracket 41 provided on the right side surface plate 11B of the base arm 11. The other end 40B of the opening/closing rope 40 is mounted at the bucket support portion 9A of the clamshell bucket 9 (see Fig. 1). An intermediate portion of the opening/closing rope 40 is alternately looped around the plurality of first opening/closing sheaves 20 and the plurality of second opening/closing sheaves 30. Also, the other end 40B side of the opening/closing rope 40 is alternately looped around the plurality of upper sheaves 9E and the plurality of lower sheaves 9F constituting the clamshell bucket 9.

As shown in Figs. 9 and 10, the opening/closing rope mounting bracket 41 is provided on the right side surface plate 11B of the base arm 11 so as to be adjacent to a rear side of the opening/closing sheave moving mechanism 25 to extend in the front-rear direction. The opening/closing rope mounting bracket 41 is composed of an upper plate 41A and a lower plate 41B that are opposite in the vertical direction with a constant interval, and a front side portion of the opening/closing rope mounting bracket 41 is welded to the rear end plate 26C of the guide rail 26 constituting the opening/closing sheave moving mechanism 25. An extension portion 41C extending rightward from the right side surface plate 11B is provided on a front side of the opening/closing rope mounting bracket 41, and a joint 41E swingable around a pin 41D in the vertical direction is mounted on the extension portion 41C. The joint 41E constitutes part of the opening/closing rope mounting bracket 41, to which the one end 40A of the opening/closing rope 40 is connected. The opening/closing cylinder 31 is disposed between the upper plate 41A and the lower plate 41B of the opening/closing rope mounting bracket 41 to protect the opening/closing cylinder 31.

The clamshell bucket 9 gets lower as the lifting cylinder 17 contracts and the first lifting sheave 18 approaches the second lifting sheave 22, and gets higher as the lifting cylinder 17 expands and the first lifting sheave 18 separates from the second lifting sheave 22. Meanwhile, the clamshell bucket 9 is opened as the opening/closing cylinder 31 contracts and the second opening/closing sheave 30 approaches the first opening/closing sheave 20, and is closed as the opening/closing cylinder 31 expands and the second opening/closing sheave 30 separates from the first opening/closing sheave 20.

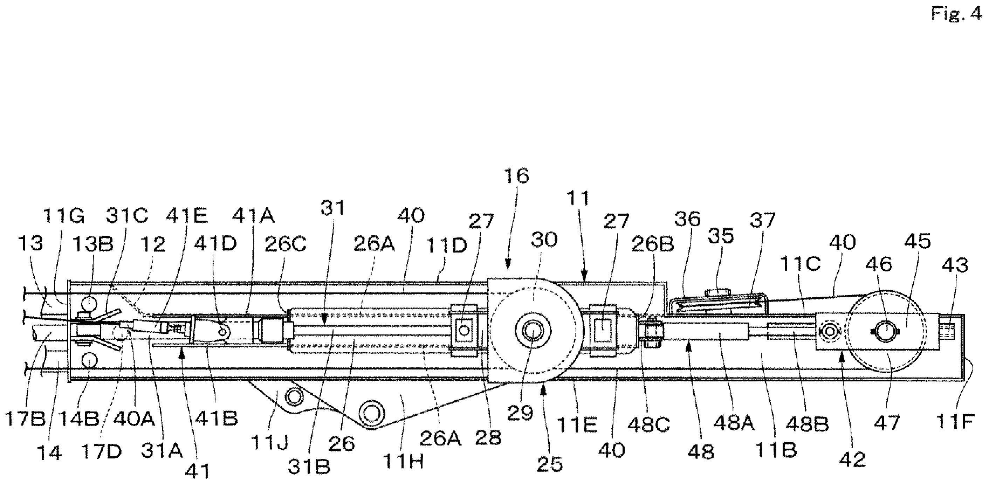

A slack adjusting sheave moving mechanism 42 is located on the front end side of the base arm 11 and provided on the right side surface plate 11B. The slack adjusting sheave moving mechanism 42 moveably supports the slack adjusting sheave 47 in the front-rear direction. As shown in Figs. 3 and 4, the slack adjusting sheave moving mechanism 42 is configured to include a guide rail 43, a slide member 44, a slack adjusting sheave bracket 45, and a slack adjusting sheave shaft 46.

The guide rail 43 is fixed to the right side surface plate 11B of the base arm 11. The slide member 44 is slidably engaged with the guide rail 43 in the length direction. The slack adjusting sheave bracket 45 is mounted on the slide member 44, using bolts and the like. A later-described rod 48B of the slack adjusting cylinder 48 is mounted on the slack adjusting sheave bracket 45. In addition, the slack adjusting sheave shaft 46 is fixed to the slack adjusting sheave bracket 45.

The slack adjusting sheave 47 is rotatably mounted on the slack adjusting sheave shaft 46 of the slack adjusting sheave moving mechanism 42. That is, the slack adjusting sheave 47 is moveably provided on the right side surface plate 11B of the base arm 11 in the front-rear direction via the slack adjusting sheave moving mechanism 42. The slack adjusting sheave 47 is configured by one sheave and rotatably supported around the slack adjusting sheave shaft 46 relative to the base arm 11.

The opening/closing rope 40 looped around the plurality of first opening/closing sheaves 20 and the plurality of second opening/closing sheaves 30 is consecutively looped around the slack adjusting sheave 47, the intermediate guide sheave 37, and the opening/closing guide sheave 34. After the other end 40B side of the opening/closing rope 40 looped around the opening/closing guide sheave 34 is looped around the upper sheave 9E and the lower sheave 9F of the clamshell bucket 9, the other end 40B of the opening/closing rope 40 is mounted on the bucket support portion 9A.

The slack adjusting cylinder 48 is located forward of the opening/closing sheave moving mechanism 25 and provided on the right side surface plate 11B of the base arm 11. The slack adjusting cylinder 48 extends in the front-rear direction to allow the slack adjusting sheave 47 to approach or separate from the second opening/closing sheave 30. The slack adjusting cylinder 48 has a tube 48A, a piston (not shown) inserted into the tube 48A, and a rod 48B whose base end is mounted on the piston and whose tip end projects from the tube 48A.

One end side (a bottom side) of the slack adjusting cylinder 48 is mounted on the right side surface plate 11B of the base arm 11 via a slack adjusting cylinder bracket 48C. The slack adjusting cylinder bracket 48C is welded to the front end plate 26B of the guide rail 26 constituting the opening/closing sheave moving mechanism 25 and integrally fixed to the guide rail 26. This configuration allows loads acting on the slack adjusting sheave 47 to be efficiently transmitted to the base arm 11 via the slack adjusting cylinder 48, the slack adjusting cylinder bracket 48C, the guide rail 26, the reinforcing plate 12 and the like. A tip end of the rod 48B is mounted on the slack adjusting sheave bracket 45 of the slack adjusting sheave moving mechanism 42.

Therefore, the slack adjusting sheave 47 mounted on the slack adjusting sheave moving mechanism 42 moves in the front-rear direction, depending on expanding/contracting operations of the slack adjusting cylinder 48, to approach or separate from the second opening/closing sheave 30. In a case where the clamshell bucket 9 touches the ground to loosen the opening/closing rope 40 for pit excavation using the deep foundation excavator 1, for example, the slack adjusting cylinder 48 is expanded. This configuration allows the slack adjusting sheave 47 to separate from the second opening/closing sheave 30 to remove slack of the opening/closing rope 40.

The deep foundation excavator 1 according to this embodiment is configured as described above, and the operation of excavating a pit using the deep foundation excavator 1 will be explained.

An on-board operator in the cab 4, as shown in Fig. 1, operates the boom cylinder 7 to lift the tip end of the boom 6 upward, and operates the arm cylinder 8 to hold the arm 10 horizontal to the ground. Next, after the clamshell bucket 9 is disposed over the ground where a pit is to be excavated, the lifting cylinder 17 is contracted. As a result, the sheave mounting member 15 moves frontward along the upper guide arm 13 and the lower guide arm 14 and the first lifting sheave 18 approaches the second lifting sheave 22, and the first opening/closing sheave 20 approaches the second opening/closing sheave 30. Consequently, the lifting rope 38 and the opening/closing rope 40 are fed from the arm 10 to lower the clamshell bucket 9.

The operator contracts the opening/closing cylinder 31 as the clamshell bucket 9 approaches the ground. As a result, the second opening/closing sheave 30 mounted on the opening/closing sheave moving mechanism 25 approaches the first opening/closing sheave 20 to feed the opening/closing rope 40 from the arm 10 and fully open the pair of buckets 9B of the clamshell bucket 9. With the clamshell bucket 9 fully open, the operator contracts the lifting cylinder 17 to allow the pair of buckets 9B of the clamshell bucket 9 to go underground by self-weight.

Next, the operator expands the slack adjusting cylinder 48 before closing the clamshell bucket 9 to allow the slack adjusting sheave 47 mounted on the slack adjusting sheave moving mechanism 42 to separate from the second opening/closing sheave 30. Consequently, only the slack of the opening/closing rope 40 is removed, with the lifting rope 38 loosened. In this state, the operator pulls up the opening/closing rope 40 to the arm 10 side by expanding the opening/closing cylinder 31 to allow the second opening/closing sheave 30 mounted on the opening/closing sheave moving mechanism 25 to separate from the first opening/closing sheave 20. As a result, the clamshell bucket 9 can close by self-weight while going underground to scoop a large amount of earth and sand.

The operator expands the lifting cylinder 17 after closing the clamshell bucket 9 to scoop earth and sand. At this time, if the lifting rope 38 is loosened after scooping the earth and sand, the lifting cylinder 17 is expanded and concurrently the slack adjusting cylinder 48 is contracted. This operation allows the first lifting sheave 18 mounted on the sheave mounting member 15 to separate from the second lifting sheave 22 and the lifting rope 38 to be pulled up to the arm 10 side, and the first opening/closing sheave 20 to separate from the second opening/closing sheave 30 and the opening/closing rope 40 to be pulled up to the arm 10 side. Consequently, the lifting rope 38 and the opening/closing rope 40 are pulled up to the arm 10 side together, and the clamshell bucket 9 is raised by the lifting rope 38 and the opening/closing rope 40, with the earth and sand held in the bucket.

After the clamshell bucket 9 is raised to the outside of the pit, for example, the upper revolving structure 3 is revolved to move the clamshell bucket 9 above a loading platform of a dump truck (not shown). In this state, the operator contracts the opening/closing cylinder 31 to allow the second opening/closing sheave 30 mounted on the opening/closing sheave moving mechanism 25 to approach the first opening/closing sheave 20. Consequently, the opening/closing rope 40 is pulled out of the arm 10 to open the clamshell bucket 9, thereby releasing excavated earth and sand onto the loading platform of the dump truck.

Thus, after releasing the earth and sand onto the loading platform of the dump truck, the upper revolving structure 3 is revolved to move the clamshell bucket 9 above the pit, and the above-described operations can be repeated to excavate a pit.

Herein, the deep foundation excavator 1 according to this embodiment can restrict deformation of the left side surface plate 11A and the right side surface plate 11B by external forces by providing the reinforcing plate 12 connecting the left side surface plate 11A and the right side surface plate 11B within the base arm 11. Moreover, by disposing part of the reinforcing plate 12 between the upper guide arm connecting pin 13B and the lower guide arm connecting pin 14B, the base arm 11 can secure the strength enough to allow a connecting portion between the upper guide arm 13 and the lower guide arm 14, and the base arm 11 to endure external forces acting on the connecting portion. Consequently, the strength of the base arm 11 can be enhanced and its life can be prolonged.

Also, the front end 12C of the reinforcing plate 12 (the flat plate portion 12A) is joined to the rear end of the front side upper surface plate 11C, and the rear end 12D of the reinforcing plate 12 (the inclined plate portion 12B) is joined to the rear end side of the rear side upper surface plate 11D. The bending portion 12E as the boundary portion between the flat plate portion 12A and the inclined plate portion 12B is disposed between the mounting portion with the boom 6 (boom connecting pin 11K), and the upper guide arm connecting pin 13B and the lower guide arm connecting pin 14B in the length direction of the base arm 11. This configuration can form the box structural portion 11T defined by the left side surface plate 11A, the right side surface plate 11B, the rear side upper surface plate 11D, the lower surface plate 11E, and the inclined plate portion 12B of the reinforcing plate 12 on the rear end 11G side of the base arm 11. Consequently, the strength on the rear end 11G side of the base arm 11 provided with the upper guide arm connecting pin 13B, the lower guide arm connecting pin 14B, and the cylinder support pin 17D can be enhanced.

Meanwhile, the property of the reinforcing plate 12 to have the flat plate portion 12A extending in the length direction of the base arm 11 and the inclined plate portion 12B bending from the flat plate portion 12A toward the rear side upper surface plate 11D can enhance the operational efficiency for mounting the lifting cylinder 17 within the base arm 11. Specifically, the bottom side of the lifting cylinder 17 can smoothly be guided along the inclined plate portion 12B to the flat plate portion 12A when the lifting cylinder 17 is inserted from the rear end 11G of the base arm 11 as an open end, with the lower surface plate 11E of the base arm 11 disposed upward. Then, the lifting cylinder 17 is inserted into the base arm 11 along the flat plate portion 12A of the reinforcing plate 12. This configuration can accommodate the frame body 17G fixed to the end portion on the bottom side of the lifting cylinder 17 (the tube 17A) within the cylinder retaining portion 11S of the base arm 11 together with the spacers 17H.

Also, the interval between the left side surface plate 11A and the right side surface plate 11B constituting the base arm 11 is set to be smaller on the front end side of the base arm 11 provided with the front surface plate 11F (one end side) than on the rear end 11G side of the base arm 11 (the other end side) where the lifting cylinder 17 is mounted via the cylinder support pin 17D. This configuration can secure the width dimension required for mounting the lifting cylinder 17 (the interval A1 between the left rear side surface plate 11A1 and the right rear side surface plate 11B1) on the rear end 11G side of the base arm 11. Consequently, the width dimension of a portion forward of a mounting portion of the lifting cylinder 17 (the interval A2 between the left front side surface plate 11A2 and the right front side surface plate 11B2) can be reduced to provide a lighter-weight base arm 11.

In addition, the boom mounting bracket 11H configured by two plates that are opposite in the right-and-left direction is fixed to the lower surface plate 11E of the base arm 11. The left boom mounting bracket 11H is located so as to overlap the left side surface plate 11A of the base arm 11 in the vertical direction. The right boom mounting bracket 11H is located so as to overlap the right side surface plate 11B of the base arm 11 in the vertical direction. This configuration can efficiently transmit external forces transmitted from the boom 6 to the base arm 11 via the boom mounting bracket 11H to the left side surface plate 11A and the right side surface plate 11B. Consequently, stress concentration at a joint portion between the boom mounting bracket 11H and the base arm 11 can be reduced. Even if the left side surface plate 11A and the right side surface plate 11B of the base arm 11 do not overlap the corresponding left boom mounting bracket 11H and the right boom mounting bracket 11H, external forces can be efficiently transmitted to the left side surface plate 11A and the right side surface plate 11B of the base arm 11 by disposing the left side surface plate 11A and the right side surface plate 11B and the corresponding left boom mounting bracket 11H and the right boom mounting bracket 11H so as to be proximate to each other (so as to allow one plate thickness of any side plate and its corresponding boom mounting bracket is twice or less the other plate thickness).

Also, the cylinder retaining portion 11S surrounded by the left side surface plate 11A, the right side surface plate 11B, the front side upper surface plate 11C, the front surface plate 11F, and the horizontal plate 11Q of the bending plate 11P is formed at the internal corner portion intersected by the front side upper surface plate 11C and the front surface plate 11F of the base arm 11. This configuration can accommodate the end portion on the bottom side of the lifting cylinder 17 mounted in the base arm 11 via the cylinder support pin 17D within the cylinder retaining portion 11S. Consequently, rocking of the lifting cylinder 17 around the cylinder support pin 17D can be restrained to enhance the buckling strength of the lifting cylinder 17. Moreover, if the dimension accuracy of the cylinder retaining portion 11S accommodating the end portion on the bottom side of the lifting cylinder 17 is ensured, the dimensional tolerance of portions other than the above end portion can be set to be large, the number of assemblies for the base arm 11 can be reduced, and the manufacturing costs can be lowered.

Also, the arm 10 is separably configured by the base arm 11, the upper guide arm 13 and the lower guide arm 14, and the sheave mounting member 15. Thus, even in a case where a space required for carrying a deep foundation excavator 1 cannot be secured at a narrow indoor working site, for example, the arm 10 is removed from the boom 6 and the removed arm 10 is separated to be loaded onto a relatively small transport vehicle and carried to a working site. Then the parts can be assembled into an arm 10 at the working site. Further, the entire length of the arm 10 can be set according to varied lengths of the upper guide arm 13 and the lower guide arm 14. As a result, in a case where the entire length of the arm 10 is increased by prolonging the upper guide arm 13 and the lower guide arm 14, the excavation depth of a pit by the deep foundation excavator 1 can be increased. Meanwhile, in a case where the upper guide arm 13 and the lower guide arm 14 are contracted to reduce the entire length of the arm 10, the arm 10 can be made to be lighter to enhance the transportability.

Also, as shown in Fig. 8, the first rib plate 23B of the second lifting sheave bracket 23 is fixed to the left side surface plate 11A of the base arm 11, and the second lifting sheave shaft 24 supporting the second lifting sheave 22 is mounted on the second lifting sheave bracket 23. The upper first rib plate 23B of the two first rib plates 23B is welded to the left side surface plate 11A in a direction perpendicular to the length direction of the base arm 11 at a position so as to overlap the flat plate portion 12A of the reinforcing plate 12. This configuration can restrict deformation of the left side surface plate 11A because external forces acting from the second lifting sheave 22 on the left side surface plate 11A of the base arm 11 are transmitted to the reinforcing plate 12 via the first rib plate 23B. Even if the first rib plate 23B does not overlap the reinforcing plate 12 (the flat plate portion 12A), external forces can be efficiently transmitted to the reinforcing plate 12 via the first rib plate 23B by disposing the first rib plate 23B and the reinforcing plate 12 so as to be proximate to each other (so as to allow the interval between the first rib plate 23B and the reinforcing plate 12 to be twice or less the plate thickness of the thicker first rib plate 23B). In other words, for example, the second lifting sheave bracket 23 may have a plurality of first rib plates 23B, and the second lifting sheave shaft 24 may be mounted on the second lifting sheave bracket 23 where the first rib plates 23B are fixed to the left side surface plate 11A.

Also, the guide rail 26 of the opening/closing sheave moving mechanism 25 moving the second opening/closing sheave 30 in the length direction of the base arm 11 is mounted on the right side surface plate 11B of the base arm 11 via the second rib plate 26A. The upper second rib plate 26A of the two second rib plates 26A is welded to the right side surface plate 11B in a direction perpendicular to the length direction of the base arm 11 at a position so as to overlap the flat plate portion 12A of the reinforcing plate 12. This configuration can restrict deformation of the right side surface plate 11B because external forces acting from the second opening/closing sheave 30 on the right side surface plate 11B of the base arm 11 are transmitted to the reinforcing plate 12 via the second rib plate 26A. Even if the second rib plate 26A does not overlap the reinforcing plate 12 (the flat plate portion 12A), external forces can be efficiently transmitted to the reinforcing plate 12 via the second rib plate 26A by disposing the second rib plate 26A and the reinforcing plate 12 so as to be proximate to each other (so as to allow the interval between the second rib plate 26A and the reinforcing plate 12 to be twice or less the plate thickness of the thicker second rib plate 26A). In other words, for example, the guide rail 26 may be mounted on a plurality of second rib plates 26A fixed to the right side surface plate 11B.

Herein, the flat plate portion 12A of the reinforcing plate 12 is disposed between the upper guide arm connecting pin 13B and the lower guide arm connecting pin 14B provided on the rear end 11G of the base arm 11. Thus, the upper first rib plate 23B and the upper second rib plate 26A are also disposed between the upper guide arm connecting pin 13B and the lower guide arm connecting pin 14B. Meanwhile, the second lifting sheave shaft 24 supporting the second lifting sheave 22 and the second opening/closing sheave shaft 29 supporting the second opening/closing sheave 30 are disposed between the upper guide arm connecting pin 13B and the lower guide arm connecting pin 14B in the vertical direction of the base arm 11. This configuration allows loads acting on the second lifting sheave 22 and on the second opening/closing sheave 30 to be efficiently transmitted to the reinforcing plate 12 via the first rib plate 23B and the second rib plate 26A. Consequently, stress concentration on the base arm 11 can be reduced and a plate thickness of each plate material constituting the base arm 11 can be reduced to provide a lighter-weight base arm 11 in its entirety.

As shown in Fig. 10, the lifting rope mounting bracket 39 mounting one end 38A of the lifting rope 38 is integrally fixed to the base plate 23A of the second lifting sheave bracket 23. This configuration can efficiently transmit loads acting on the lifting rope 38 from the lifting rope mounting bracket 39 to the base arm 11 via the second lifting sheave bracket 23. Consequently, stress concentration at a joint portion between the lifting rope mounting bracket 39 and the base arm 11 can be reduced. Moreover, for example, compared to a case where the lifting rope mounting bracket 39 is located away from the base plate 23A of the second lifting sheave bracket 23, the length dimension on the rear end 11G side of the base arm 11 (the length dimension from the boom connecting pin 11K to the rear end 11G) can be shortened.

As shown in Fig. 9, the opening/closing cylinder bracket 31C supporting the bottom side of the opening/closing cylinder 31 is disposed between the upper guide arm connecting pin 13B and the lower guide arm connecting pin 14B, and the cylinder support pin 17D in the length direction of the base arm 11. As a result, for example, compared to a case where the opening/closing cylinder bracket 31C is mounted forward of the cylinder support pin 17D, the length dimension on the rear end 11G side of the base arm 11 can be shortened. Moreover, the strength on the rear end 11G side of the base arm 11 as an open end can be enhanced by fixing the opening/closing cylinder bracket 31C to the periphery of the upper guide arm connecting pin 13B, the lower guide arm connecting pin 14B, and the cylinder support pin 17D.

In this case, the other end 31E side (front side) of the opening/closing cylinder bracket 31C in the length direction is formed so as to gradually expand the interval in the vertical direction toward the cylinder support pin 17D. This configuration allows the other end 31E of the opening/closing cylinder bracket 31C to be disposed to be adjacent to the cylinder support pin 17D vertically to reinforce the periphery of the mounting portion of the cylinder support pin 17D of the base arm 11.

In addition, the opening/closing rope mounting bracket 41 having the upper plate 41A and the lower plate 41B that are opposite in the vertical direction is provided on the rear side of the opening/closing sheave moving mechanism 25, and the opening/closing cylinder 31 is disposed between the upper plate 41A and the lower plate 41B of the opening/closing rope mounting bracket 41. This configuration can protect the opening/closing cylinder 31 from interferences such as vibration of the opening/closing rope 40 by the opening/closing rope mounting bracket 41.

As shown in Figs. 3 and 4, the slack adjusting cylinder bracket 48C mounting the one end side (the bottom side) of the slack adjusting cylinder 48 is integrally fixed to the guide rail 26 constituting the opening/closing sheave moving mechanism 25. This configuration can efficiently transmit loads acting on the slack adjusting sheave 47 to the base arm 11 via the slack adjusting cylinder 48, the slack adjusting cylinder bracket 48C, the guide rail 26, the reinforcing plate 12 and the like. Consequently, stress concentration at a joint portion between the slack adjusting cylinder bracket 48C and the base arm 11 can be reduced. Also, for example, compared to a case where the slack adjusting cylinder bracket 48C is mounted on a front side of the guide rail 26, the length dimension on the rear end 11G side of the base arm 11 can be shortened.

Thus, in this embodiment, the working mechanism 5 of the deep foundation excavator 1 includes the base arm 11 with the clamshell bucket 9 disposed on one end side of the base arm in a length direction, the upper guide arm 13 and the lower guide arm 14 connected to the other end side of the base arm 11 via the upper guide arm connecting pin 13B and the lower guide arm connecting pin 14B, the first lifting sheave 18 and the first opening/closing sheave 20, the lifting cylinder 17, the second lifting sheave 22 and the second opening/closing sheave 30, the lifting rope 38, and the opening/closing rope 40. The base arm 11 is formed as a tubular body including the left side surface plate 11A and the right side surface plate 11B opposite with an interval in a direction perpendicular to the length direction, the second lifting sheave shaft 24 and the second opening/closing sheave shaft 29 are disposed between the upper guide arm connecting pin 13B and the lower guide arm connecting pin 14B in the vertical direction of the base arm 11, the base arm 11 is provided with the reinforcing plate 12 extending in the length direction of the base arm 11, with the left side surface plate 11A and the right side surface plate 11B connected, and part of the reinforcing plate 12 is disposed between the upper guide arm connecting pin 13B and the lower guide arm connecting pin 14B in the vertical direction of the base arm 11.

This configuration can restrict deformation of the left side surface plate 11A and the right side surface plate 11B by external forces by disposing part of the reinforcing plate 12 connecting the left side surface plate 11A and the right side surface plate 11B between the upper guide arm connecting pin 13B and the lower arm connecting pin 14B. Consequently, the base arm 11 can secure the strength enough to allow a connecting portion between the upper guide arm 13 and the lower guide arm 14, and the base arm 11 to endure external forces acting thereon and its life can be prolonged.

In the embodiment, the base arm 11 is rotatably mounted at the tip end of the boom 6 mounted on the upper revolving structure 3, the reinforcing plate 12 has the flat plate portion 12A disposed between the upper guide arm connecting pin 13B and the lower guide arm connecting pin 14B and extending in the length direction of the base arm 11 and the inclined plate portion 12B bending from the flat plate portion 12A and extending upward of the upper guide arm connecting pin 13B, and the bending portion 12E as a boundary portion between the flat plate portion 12A and the inclined plate portion 12B is disposed between the mounting portion with the boom 6 (the boom connecting pin 11K), and the upper guide arm connecting pin 13B and the lower guide arm connecting pin 14B in the length direction of the base arm 11. This configuration can form the box structural portion 11T defined by the inclined plate portion 12B of the reinforcing plate 12 on the rear end 11G side of the base arm 11. Consequently, the strength on the rear end 11G side of the base arm 11 provided with the upper guide arm connecting pin 13B, the lower guide arm connecting pin 14B, and the cylinder support pin 17D can be enhanced.

In the embodiment, the lifting cylinder 17 is mounted on the left side surface plate 11A and the right side surface plate 11B located on the other end (the rear end 11G) side of the base arm 11 in the length direction and constituting the base arm 11 via the cylinder support pin 17D, the interval between the left side surface plate 11A and the right side surface plate 11B of the base arm 11 is set to be smaller on one end side of the base arm 11 (the interval between the left front side surface plate 11A2 and the right front side surface plate 11B2) than on the other end side of the base arm 11 where the lifting cylinder 17 is mounted (the interval between the left rear side surface plate 11A1 and the right rear side surface plate 11B1). This configuration can reduce the width dimension forward of the mounting portion of the lifting cylinder 17 of the base arm 11 (the cylinder support pin 17D) to provide a lighter-weight base arm 11.

In the embodiment, the base arm 11 has the boom mounting bracket 11H rotatably mounted on the tip end of the boom 6 mounted on the upper revolving structure 3, and the boom mounting bracket 11H is located so as to overlap the left side surface plate 11A and the right side surface plate 11B constituting the base arm 11 in the vertical direction. This configuration can efficiently transmit external forces transmitted from the boom 6 to the base arm 11 via the boom mounting bracket 11H to the left side surface plate 11A and the right side surface plate 11B. Consequently, stress concentration at the joint portion between the boom mounting bracket 11H and the base arm 11 can be reduced.

In the embodiment, the lifting cylinder 17 is rotatably mounted on the other end side of the base arm 11 in the length direction via the cylinder support pin 17D, and the cylinder retaining portion 11S held by restraining the end portion on the bottom side of the lifting cylinder 17 is provided on one end side of the base arm 11 in the length direction. This configuration can restrain rocking of the lifting cylinder 17 around the cylinder support pin 17D and enhance the buckling strength of the lifting cylinder 17 by accommodating the end portion on the bottom side of the lifting cylinder 17 within the cylinder retaining portion 11S.

In the embodiment, the second lifting sheave shaft 24 is mounted on the second lifting sheave bracket 23 having the plurality of first rib plates 23B fixed to the left side surface plate 11A constituting the base arm 11. This configuration can restrict deformation of the left side surface plate 11A.

In the embodiment, the second opening/closing sheave shaft 29 is mounted on the second opening/closing sheave bracket 28 moving along the guide rail 26 extending in the length direction of the base arm 11, and the guide rail 26 is mounted on the plurality of second rib plates 26A fixed to the right side surface plate 11B constituting the base arm 11. This configuration can restrict deformation of the right side surface plate 11B.

In the embodiment, the base arm 11 is provided with the lifting rope mounting bracket 39 mounting one end 38A of the lifting rope 38, and the lifting rope mounting bracket 39 is integrally fixed to the second lifting sheave bracket 23. This configuration can efficiently transmit loads acting on the lifting rope 38 from the lifting rope mounting bracket 39 to the base arm 11 via the second lifting sheave bracket 23. Consequently, stress concentration at the joint portion between the lifting rope mounting bracket 39 and the base arm 11 can be reduced.

In the embodiment, the lifting cylinder 17 is mounted on the other end side of the base arm 11 in the length direction via the cylinder support pin 17D, the opening/closing cylinder 31 is provided between the base arm 11 and the second opening/closing sheave 30, with one end thereof connected to the base arm 11 via the opening/closing cylinder bracket 31C and the other end thereof connected to the second opening/closing sheave 30 to allow the second opening/closing sheave 30 to approach and separate from the first opening/closing sheave 20, and the opening/closing cylinder bracket 31C is disposed between the upper guide arm connecting pin 13B and lower guide arm connecting pin 14B, and the cylinder support pin 17D in the length direction of the base arm 11. This configuration can enhance the strength on the other end side of the base arm 11 in the length direction with the opening/closing cylinder bracket 31C fixed to the periphery of the upper guide arm connecting pin 13B, the lower guide arm connecting pin 14B, and the cylinder support pin 17D.

In the embodiment, the opening/closing cylinder bracket 31C is configured by two plates that are opposite in the vertical direction, with one end 31D side thereof in the length direction extending between the upper guide arm connecting pin 13B and the lower guide arm connecting pin 14B, with a constant interval in the vertical direction, and with the other end 31E side thereof in the length direction expanding the interval in the vertical direction toward the cylinder support pin 17D. This configuration allows the other end 31E of the opening/closing cylinder bracket 31C to be disposed to be adjacent to the cylinder support pin 17D vertically to reinforce the periphery of the mounting portion of the cylinder support pin 17D of the base arm 11.

In the embodiment, the base arm 11 is provided with the opening/closing rope mounting bracket 41 having the upper plate 41A and the lower plate 41B that are opposite in the vertical direction and mounting one end 40A of the opening/closing rope 40, and the opening/closing cylinder 31 is disposed between the upper plate 41A and the lower plate 41B of the opening/closing rope mounting bracket 41. This configuration can protect the opening/closing cylinder 31 from interferences such as vibration of the opening/closing rope 40, using the opening/closing rope mounting bracket 41.

In the embodiment, the base arm 11 is provided with the slack adjusting sheave 47 around which the opening/closing rope 40 is looped and movable in a direction allowing itself to approach and separate from the second opening/closing sheave 30 and the slack adjusting cylinder 48 moving the slack adjusting sheave 47, the second opening/closing sheave shaft 29 is mounted on the second opening/closing sheave bracket 28 moving along the guide rail 26 extending in the length direction of the base arm 11, and the slack adjusting cylinder bracket 48C supporting one end of the slack adjusting cylinder 48 is integrally fixed to the guide rail 26. This configuration can efficiently transmit loads acting on the slack adjusting sheave 47 to the base arm 11 via the slack adjusting cylinder 48, the slack adjusting cylinder bracket 48C, the guide rail 26, the reinforcing plate 12 and the like. Consequently, stress concentration at the joint portion between the slack adjusting cylinder bracket 48C and the base arm 11 can be reduced.

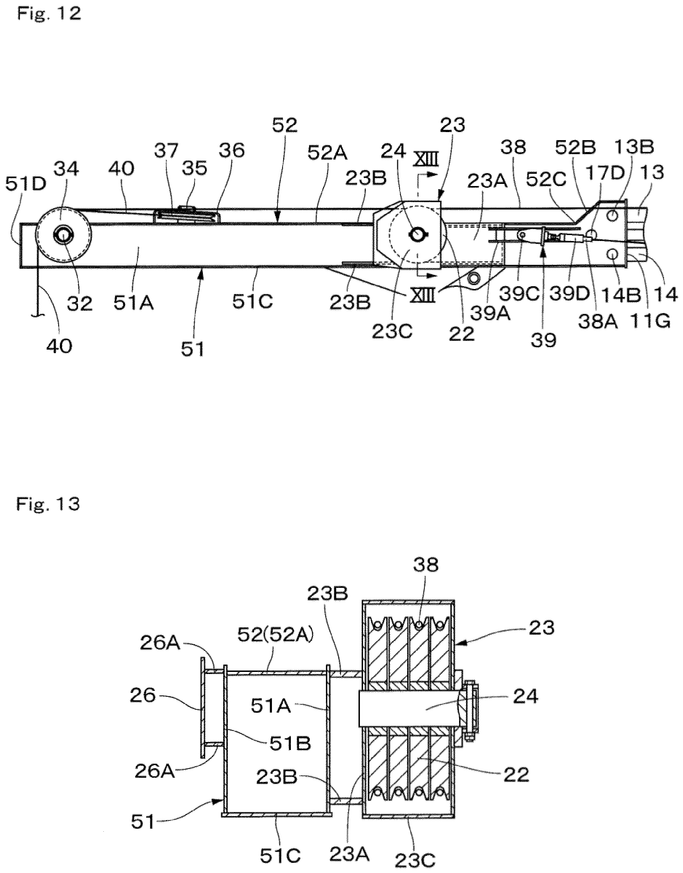

Further, in the embodiment, the reinforcing plate 12 composed of a member different from the front side upper surface plate 11C and the rear side upper surface plate 11D of the base arm 11 is illustrated as a reinforcing plate connecting the left side surface plate 11A and the right side surface plate 11B of the base arm 11. However, the present invention is not limited to that, and an upper surface plate 52 of a base arm 51 may be configured by a reinforcing plate, as in a modification shown in Figs. 12 and 13. That is, the base arm 51 according to a modification is formed as an angular tubular body having a left side surface plate 51A, a right side surface plate 51B, a lower surface plate 51C, a front plate 51D and the like, and the upper surface plate 52 connecting upper ends of the left side surface plate 51A and the right side surface plate 51B as a pair of side plates constitutes the reinforcing plate according to the modification.

The upper surface plate 52 of the base arm 51 is disposed between the upper guide arm connecting pin 13B and the lower guide arm connecting pin 14B. The upper surface plate 52 has a flat plate portion 52A extending in a length direction of the base arm 51, with a constant interval with the lower surface plate 51C and an inclined plate portion 52B bending rearward and upward from the flat plate portion 52A and extending upward of the upper guide arm connecting pin 13B. A bending portion 52C as a boundary portion between the flat plate portion 52A and the inclined plate portion 52B is disposed between the mounting portion with the boom 6 (boom connecting pin 11K), and the upper guide arm connecting pin 13B and the lower guide arm connecting pin 14B in the length direction of the base arm 51. The upper first rib plate 23B fixed to the base plate 23A of the second lifting sheave bracket 23 is fixed to the left side surface plate 51A of the base arm 51 at a position so as to overlap the upper surface plate 52 in the right-and-left direction perpendicular to the length direction of the base arm 51. Also, the upper second rib plate 26A fixed to the guide rail 26 of the opening/closing sheave moving mechanism 25 is fixed to the right side surface plate 51B of the base arm 51 at a position so as to overlap the upper surface plate 52 (the flat plate portion 52A) in the right-and-left direction.

The base arm 51 according to the modification includes the upper surface plate 52 as a reinforcing plate connecting the left side surface plate 51A and the right side surface plate 51B, and its basic operation is not particularly different from that of the base arm 11 according to an embodiment including the reinforcing plate 12. Therefore, the base arm 51 according to the modification can reduce the dimension in the vertical direction and streamline the system to provide a lighter-weight apparatus and reduce manufacturing costs by configuring the upper surface plate 52 by a reinforcing plate.

In the embodiment, a case where the reinforcing plate 12 is formed of one plate fixed to the left side surface plate 11A and the right side surface plate 11B of the base arm 11 is illustrated. However, the present invention is not limited to that, and for example, two plates composed of one plate fixed to the left side surface plate 11A of the base arm 11 and the other plate fixed to the right side surface plate 11B of the base arm 11 may be connected at an intermediate portion in the right-and-left direction of the base arm 11. That is, for example, the base arm 11 may have the reinforcing plate 12 configured to be fixed to at least one of the left side surface plates 11A and the right side surface plate 11B and to extend in the length direction of the base arm 11.

In the embodiment, the case where the base arm 11 is configured by an angular tubular body having a rectangular-shaped cross section is illustrated. However, the present invention is not limited to that, and a base arm may be formed, using a tubular body having a cross section of a polygonal shape other than a rectangle having a pair of opposing side plates, for example.

### DESCRIPTION OF REFERENCE NUMERALS

1: Deep foundation excavator
2: Lower traveling structure (Vehicle body)
3: Upper revolving structure (Vehicle body)
5: Working mechanism
6: Boom
9: Clamshell bucket
10: Arm
11, 51: Base arm
11A, 51A: Left side surface plate (Side plate)
11B, 51B: Right side surface plate (Side plate)
11H: Boom mounting bracket
11K: Boom connecting pin (Mounting portion with boom)
11S: Cylinder retaining portion
12: Reinforcing plate
12A, 52A: Flat plate portion
12B, 52B: Inclined plate portion
12E, 52C: Bending portion
13: Upper guide arm
13B: Upper guide arm connecting pin
14: Lower guide arm
14B: Lower guide arm connecting pin
17: Lifting cylinder
17D: Cylinder support pin
18: First lifting sheave
20: First opening/closing sheave
22: Second lifting sheave
23: Second lifting sheave bracket
23B: First rib plate
24: Second lifting sheave shaft (Sheave shaft)
26: Guide rail
26A: Second rib plate
28: Second opening/closing sheave bracket
29: Second opening/closing sheave shaft (Sheave shaft)
30: Second opening/closing sheave
31: Opening/closing cylinder
31C: Opening/closing cylinder bracket
38: Lifting rope
38A: One end
39: Lifting rope mounting bracket
40: Opening/closing rope
41: Opening/closing rope mounting bracket
41A: Upper plate
41B: Lower plate
47: Slack adjusting sheave
48: Slack adjusting cylinder
48C: Slack adjusting cylinder bracket
52: Upper surface plate (Reinforcing plate)

## Claims

1. A deep foundation excavator comprising a self-propelled vehicle body and a working mechanism provided on the vehicle body, wherein
the working mechanism includes: a base arm rotatably provided on the vehicle body and linked to a clamshell bucket liftably disposed on one end side of the base arm in a length direction thereof;
an upper guide arm and a lower guide arm connected to the other end side of the base arm via an upper guide arm connecting pin and a lower guide arm connecting pin, with a constant interval in the vertical direction and extending in the length direction of the base arm;
a first lifting sheave and a first opening/closing sheave moveably provided along the upper guide arm and the lower guide arm;
a lifting cylinder mounted on the base arm and moving the first lifting sheave and the first opening/closing sheave;
a second lifting sheave and a second opening/closing sheave separated from the first lifting sheave and the first opening/closing sheave and each rotatably provided on the base arm around a sheave shaft;
a lifting rope looped around the first lifting sheave and the second lifting sheave and raising and lowering the clamshell bucket; and
an opening/closing rope looped around the first opening/closing sheave and the second opening/closing sheave and opening and closing the clamshell bucket, wherein
the base arm is formed as a tubular body including a pair of side plates opposite with an interval in a direction perpendicular to the length direction,
the sheave shaft of the second lifting sheave and the second opening/closing sheave is disposed between the upper guide arm connecting pin and the lower guide arm connecting pin in the vertical direction of the base arm, and
the base arm is provided with a reinforcing plate fixed to at least one of the pair of side plates and extending in the length direction of the base arm, and part of the reinforcing plate is disposed between the upper guide arm connecting pin and the lower guide arm connecting pin in the vertical direction of the base arm.

2. The deep foundation excavator according to claim 1,
wherein
the base arm is rotatably mounted on a tip end of a boom mounted on the vehicle body, and
the reinforcing plate has a flat plate portion disposed between the upper guide arm connecting pin and the lower guide arm connecting pin and extending in the length direction of the base arm and an inclined plate portion bending from the flat plate portion and extending upward of the upper guide arm connecting pin, wherein
a bending portion as a boundary portion between the flat plate portion and the inclined plate portion is disposed between a mounting portion with the boom, and the upper guide arm connecting pin and the lower guide arm connecting pin in the length direction of the base arm.

3. The deep foundation excavator according to claim 1,
wherein
the lifting cylinder is located on the other end side of the base arm in the length direction and mounted on the pair of side plates constituting the base arm via a cylinder support pin, and
the interval between the pair of side plates of the base arm is set to be smaller on one end side of the base arm than on the other end side of the base arm where the lifting cylinder is mounted.

4. The deep foundation excavator according to claim 1,
wherein
the base arm has a boom mounting bracket rotatably mounted on the tip end of the boom mounted on the vehicle body, wherein
the boom mounting bracket is located so as to overlap the pair of side plates constituting the base arm in the vertical direction.

5. The deep foundation excavator according to claim 1,
wherein
the lifting cylinder is rotatably mounted on the other end side of the base arm in the length direction via the cylinder support pin, and
a cylinder retaining portion held by restraining an end portion on a bottom side of the lifting cylinder is provided on one end side of the base arm in the length direction.

6. The deep foundation excavator according to claim 1,
wherein
the sheave shaft of the second lifting sheave is mounted on a second lifting sheave bracket having a plurality of first rib plates fixed to one of the pair of side plates constituting the base arm.

7. The deep foundation excavator according to claim 6,
wherein
the sheave shaft of the second opening/closing sheave is mounted on a second opening/closing sheave bracket moving along a guide rail extending in the length direction of the base arm, wherein
the guide rail is mounted on a plurality of second rib plates fixed to the other of the pair of side plates constituting the base arm.

8. The deep foundation excavator according to claim 6,
wherein
a lifting rope mounting bracket mounting one end of the lifting rope is provided on the base arm, wherein
the lifting rope mounting bracket is integrally fixed to the second lifting sheave bracket.

9. The deep foundation excavator according to claim 1,
wherein
the lifting cylinder is mounted on the other end side of the base arm in the length direction via the cylinder support pin, and
an opening/closing cylinder is provided between the base arm and the second opening/closing sheave, with one end thereof connected to the base arm via the opening/closing cylinder bracket and the other end thereof connected to the second opening/closing sheave to allow the second opening/closing sheave to approach and separate from the first opening/closing sheave, wherein
the opening/closing cylinder bracket is disposed between the upper guide arm connecting pin and the lower guide arm connecting pin, and the cylinder support pin in the length direction of the base arm.

10. The deep foundation excavator according to claim 9,
wherein
the opening/closing cylinder bracket is configured by two plates that are opposite in the vertical direction, with one end side thereof in the length direction extending between the upper guide arm connecting pin and the lower guide arm connecting pin, with a constant interval in the vertical direction, and with the other end side thereof in the length direction expanding the interval in the vertical direction toward the cylinder support pin.

11. The deep foundation excavator according to claim 9,
wherein
an opening/closing rope mounting bracket having an upper plate and a lower plate that are opposite in the vertical direction and mounting one end of the opening/closing rope is provided on the base arm, wherein
the opening/closing cylinder is disposed between the upper plate and the lower plate of the opening/closing rope mounting bracket.

12. The deep foundation excavator according to claim 1,
wherein
the base arm is provided with a slack adjusting sheave around which the opening/closing rope is looped and movable in a direction allowing itself to approach and separate from the second opening/closing sheave and a slack adjusting cylinder moving the slack adjusting sheave, and
the sheave shaft of the second opening/closing sheave is mounted on a second opening/closing sheave bracket moving along a guide rail extending in the length direction of the base arm, wherein
a slack adjusting cylinder bracket supporting one end of the slack adjusting cylinder is integrally fixed to the guide rail.
